(19) Europäisches Patentamt
European Patent Office
Office européen des brevets

(11) **EP 0 691 081 B1**

(12) **EUROPÄISCHE PATENTSCHRIFT**

(45) Veröffentlichungstag und Bekanntmachung des Hinweises auf die Patenterteilung:
**04.06.2003 Patentblatt 2003/23**

(51) Int Cl.[7]: **A23L 1/236**, A47G 19/24

(21) Anmeldenummer: **95109900.1**

(22) Anmeldetag: **24.06.1995**

(54) **Kalorienarmer Kristallzuckerersatz**

Low-calorie crystalline sugar substitute

Succédané du sucre cristallin faible en calories

(84) Benannte Vertragsstaaten:
**AT BE DE ES FR GB IT NL SE**

(30) Priorität: **08.07.1994 CH 219994**

(43) Veröffentlichungstag der Anmeldung:
**10.01.1996 Patentblatt 1996/02**

(73) Patentinhaber: **Ajinomoto Co., Inc.**
**Tokyo 104-8315 (JP)**

(72) Erfinder: **Vetsch, Werner**
**CH-6318 Walchwil (CH)**

(74) Vertreter: **Blum, Rudolf Emil Ernst**
**c/o E. Blum & Co**
**Patentanwälte**
**Vorderberg 11**
**8044 Zürich (CH)**

(56) Entgegenhaltungen:
**EP-A- 0 335 852**          **EP-A- 0 411 991**
**EP-A- 0 545 890**          **EP-A- 0 575 764**

- **PATENT ABSTRACTS OF JAPAN vol. 008 no. 156 (C-234) ,19.Juli 1984 & JP-A-59 059173 (AJINOMOTO KK) 4.April 1984,**
- **PATENT ABSTRACTS OF JAPAN vol. 015 no. 474 (C-0890) ,3.Dezember 1991 & JP-A-03 204895 (AJINOMOTO CO INC) 6.September 1991,**
- **PATENT ABSTRACTS OF JAPAN vol. 013 no. 313 (C-618) ,17.Juli 1989 & JP-A-01 098457 (MITSUBISHI KASEI CORP;OTHERS: 01) 17.April 1989,**
- **PATENT ABSTRACTS OF JAPAN vol. 008 no. 162 (C-235) ,26.Juli 1984 & JP-A-59 063158 (AJINOMOTO KK) 10.April 1984,**

**Beschreibung**

Die vorliegende Erfindung betrifft eine Applikationsmethode für Süssstoffe, insbesonders des unter dem Namen Aspartam bekannten L-Phenylalanin-L-Aspartylmethylesters, speziell als Kristallzuckerersatz.

Süssstoffe, insbesondere Aspartam, haben sich in unserem Leben einen festen Platz erobert, sei es als notwendiger Zuckerersatz von Diabetikern, sei es als gewollter Zuckerersatz bei linienbewusster Ernährung.

Der Konsum des modernen Stüssstoffes Aspartam, der sich im Vergleich mit konventionellen Süssstoffen in wesentlichen Eigenschaften, wie:

- Reinem Süssgeschmack der kaum von Zucker unterschieden werden kann
- Nahrungsmittel-ähnlicher Aufbau (Dipeptidmethylester, Aminosäure-ester)
- Metabolisierung wie ein Lebensmittel
- Toxikologisch unbedenklich. Höchster Sicherheitswert aller zur Zeit zugelassenen Süssstoffe (Acceptable Daily Intake (ADI), FAO/WHO, FDA) unterscheidet, wird durch eine fehlende und attraktive Darbietungsform als ernährungsphysiologisch wertvoller Tafelsüssstoff stark eingeschränkt.

Die heute üblichen kalorienarmen oder kalorienfreien Süssstoffe weisen eine viel höhere Süsskraft auf als Zucker. Bei Aspartam ist die Süsskraft, bezogen auf identische Gewichte, etwa 200mal höher als jene von Zucker. Die stark erhöhte Süsskraft spielt beispielsweise bei der grosstechnischen Zumischung zu flüssigen Zubereitungen keine Rolle. Dagegen ist die Applikation im Haushalt - aufgrund der geringen zuzudosierenden Menge - schwierig.

Ueblicherweise werden Süssstoffe für den privaten Gebrauch mit einem Trägerstoff zusammen, flüssig oder in Form von Tabletten, angeboten. Die flüssige Applikationsform hat den Nachteil, dass dem Süssstoff und damit auch dem Nahrungsmittel zusätzlich Wasser beigemischt wird, was beispielsweise aus bakteriologischen und funktionellen Gründen oft unerwünscht ist. Der bakteriologische und chemische Abbau kann insbesonders bei Aspartam zu einer unerwünschten Reduktion der Süsskraft im neutralen pH-Bereich führen, sofern nicht Stabilisatoren, Konservierungsmittel etc. zugesetzt werden. Die Tablettenform dagegen setzt deren Auflösung voraus und ist deshalb primär für warme Getränke geeignet. Ein weiterer Nachteil der Tablettenform ist, dass Dosierung nur in stark beschränktem Masse möglich ist, üblicherweise in "Würfelzuckereinheiten". Zum Beispiel beschreibt Glicksman et al. in US 4,007,288, 4,001,456 verschiedene Verfahren zur Herstellung von füllstoffhaltigen kristallzukkerähnlichen Präparaten mit Schüttdichten entsprechend Zucker bis zu 0.04 g/cm$^3$.

Bei Schüttdichten und Süsskraft ähnlich Zukker müssen diese Präparate infolge der stark erhöhten Süsskraft des Süssstoffs grosse Mengen Füllstoff enthalten, was zu Produkten führt, die nicht für Diabetiker geeignet sind. Wird der Füllstoffanteil reduziert, so vermindert sich das Dosiervolumen und z.B. bei Aspartan auch dessen Löslichkeit.

Es wurden auch bereits Anstrengungen unternommen, kristallzuckerähnliche Präparate herzustellen, welche in einem ähnlichen Volumenverhältnis wie Zucker verwendet werden. Solche "Löffel für Löffel ("spoon for spoon") Produkte werden insbesondere durch ein spezielles Sprühtrocknungsverfahren hergestellt, mittels dessen die Partikel z.B. durch Zugabe von flüssigem $CO_2$ gebläht werden, so dass zwar das Volumenverhältnis zu Kristallzucker etwa gleich ist, die Schüttdichte aber sehr viel geringer. Wie der Name bereits sagt, werden diese üblicherweise mit Löffel dosiert. Dieser grosse Unterschied in der Schüttdichte, der ein überaus ungünstiges Süsskraft/Verpackungs-Verhältnis ergibt, wird vom Anwender als Nachteil empfunden. Zudem schäumen diese Produkte infolge der produktionsbedingten "Blähung" bei der Anwendung in flüssigen Anwendungen und auf feuchten Nahrungsmitteln auf und neigen dazu zusammenzuklumpen.

Aus Patent Abstracts of Japan Bd. 008 Nr. 162 (C 235) zu JP-A-59 063 158 sind Körner und Kristalle bekannt, die einen Süssstoff, einen Träger und/oder ein Nahrungsmittel-Material enthalten und die mit einem Aspartam enthaltenden Überzug versehen sind. Es ist aber weder die gleichzeitige Anwesenheit von Körnern und Kristallen mit höherem oder geringerem Stüssstoffgehalt offenbart, noch eine Dosierform.

Patent Abstracts of Japan Bd. 013 Nr. 313 (C-618) zu JP-A-01 098 457 beschreibt ebenfalls einheitliche Körner, die einen Süssstoff enthaltenden Überzug aufweisen, wobei der Kern dieser Körner meso-Erythritol ist.

Patent Abstracts of Japan Bd. 008 Nr. 156 (C-234) zu JP-A-59 059 173 offenbart ein Granulat, das hergestellt wird indem vorab Aspartam-Pulver und Trägermaterialpulver gemischt werden und diese Mischung dann unter Zugabe einer Aspartam-Lösung oder einer Aspartam-Aufschlämmung als Bindemittel granuliert wird. Da erst das Granulat eine solche Grösse aufweist, dass das Produkt als Kristallzucker- und nicht Puderzuckerersatz angesehen werden könnte, liegt auch gemäss D3 ein Produkt mit einheitlichen Partikeln vor.

Aus EP-A-0 335 852 ist ein Puderzuckerersatz bekannt, der Füllstoffe und Süssstoffe enthält.

EP-A-0 411 951 betrifft ein Verfahren zur Herstellung eines Stüssstoffes ähnlich einem Zucker-"Klumpen".

In EP 0 575 764 wird ein Vorratsbehälter mit Behälteröffnung für streufähiges und fliessfähiges Gut wie Salz, Zucker und Pfeffer offenbart. Es wird darin aber weder die Verwendung für ein Süssstoffpräparat nahegelegt noch werden Anforderungen an ein geeignetes Süssstoffpräparat offenbart.

Ziel der vorliegenden Erfindung war es deshalb, eine Applikationsmethode für kristallzuckerähnliche Süssstoffpräparate bereitzustellen, sowie Süssstoffpräparate, die sich insbesonders auch zur Verwendung mittels dieser Applikationsmethode eignen.

Dieses Ziel wurde erreicht, durch die Bereitstellung eines Applikators für füllstoffhaltige Süssstoffpräparate mit bestimmter Teilchengrösse und bestimmter Schüttdichte, eines geeigneten Süssstoffpräparats und eines Konfektionierverfahrens für das Süssstoffpräparat.

Es hat sich gezeigt, dass ein agglomeriertes oder offenporiges Süssstoffpräparat mit einer Schüttdichte von mindestens 0.2 g/cm$^3$, besser mindestens 0.3 g/cm$^3$ und bevorzugt 0.4 - 0.5 g/cm$^3$ sehr ähnliche Eigenschaften wie Kristallzucker aufweist und mittels eines Streubehälters sehr gut appliziert und in konzentrierter Form dosiert werden kann.

Die Applikation mit Streubehälter eignet sich auch sehr gut zum Nachsüssen, z.B. von Backwaren, bei denen zudem ein dekorativer Effekt erzielt werden kann, oder auch von kakaohaltigen Milchgetränken.

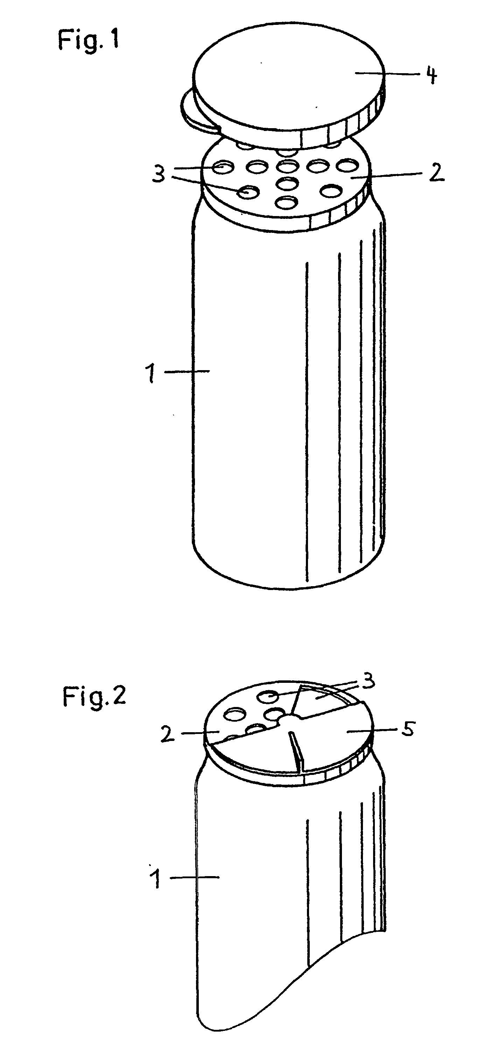

Figur 1 zeigt einen Streubehälter mit einheitlichen Oeffnungen in der Siebfläche sowie dem abgenommenen Deckel, zum Verschliessen der Dose.

Figur 2 zeigt eine Siebfläche mit verschieden grossen Oeffnungen in der Siebfläche, die selektiv angewählt resp. verschlossen werden können.

Der Behälter 1 kann beliebige Form aufweisen und ist mindestens an einer Seite mit einer Siebfläche 2 versehen. Die vorzugsweise eingesetzten Behälter sind zylinderförmig, können gut mit einer Hand gefasst werden und sind einseitig mit einem abnehmbaren Deckel 4 versehen, der die Siebfläche verschliesst. Die Siebfläche kann eine oder mehrere Oeffnungen 3 gleicher oder unterschiedlicher Grösse aufweisen, die zudem über ein geeignetes Mittel 5, z.B. einen verschiebbaren Deckel, anwählbar sein können. Vorzugsweise sind die Oeffnungen mindestens in einem Bereich der Siebfläche kreisförmig mit einem Durchmesser von ca. 1,5 - 3,5 mm.

Um den Zutritt von Feuchtigkeit minim zu halten, ist es bei nachfüllbaren Behältern vorteilhaft, wenn die Nachfüllung durch die Siebfläche erfolgt oder dass dieses abnehmbar ist und die Einfüllöffnung freigibt.

Diese Applikationsform ist von Gewürzen, z.B. Streuwürze wie Aromat® bekannt. Es wurde nun gefunden, dass diese Applikationsform auch für Süssstoffpräparate geeignet ist, sofern diese agglomeriert oder porös und dadurch gut löslich sind. Geeignete poröse Produkte, die die obengenannte Schüttdichte aufweisen, sind bekannt. Vorzugsweise sollten die Partikel Grössen von 200 bis 1000 µm, speziell bevorzugt von 300 bis 800 µm aufweisen.

Die bekannten Produkte haben den Nachteil, dass bei Aenderung des Süssstoff/Füllstoff-Verhältnisses die Produktion gestoppt und mit der neuen Zusammensetzung - allenfalls nach Reinigung - wieder neu aufgestartet werden muss.

Es wurde nun gefunden, dass ein Produkt aus einer Mischung enthaltend süssstoffhaltige Partikel und süssstofffreie Partikel als einheitlich empfunden wird, wenn mindestens ca. 10% süssstoffhaltige Partikel darin enthalten sind. Selbstverständlich kann eine ähnliche Konfektionierbarkeit auch mit unterschiedlich stark süssstoffhaltigen Partikeln erzielt werden, wobei die Grenzen dann beliebig wählbar sind.

Diese Konfektioniermethode hat den Vorteil, dass die aufwendige Partikelherstellung auf zwei Produkte beschränkt werden kann mittels derer, über die Konfektionierung, durch einfache Trockenmischung der mindestens zwei Komponenten in einfachsten Apparaturen, ein vielfältiges Sortiment an Verbraucherprodukten hergestellt werden kann, wodurch sich die Verbraucherwünsche besser befriedigen lassen.

Es hat sich gezeigt, dass auch die Trockenmischung reinen Aspartampulvers mit Füllstoffpartikeln zu einem brauchbaren Produkt führt. Kräfte, die zwischen Aspartampulver und gewissen Füllstoffen auftreten, sind zwar ausreichend, um eine Entmischung z.B. während des Transports zu vermindern, sie können diese aber nicht ganz verhindern.

Bevorzugt ist deshalb ein Mischprodukt aus reinen Füllstoffpartikeln und süssstoffhaltigen Partikeln mit maximal 50% Süssstoffgehalt, insbesonders ein Mischprodukt aus süssstoffhaltigen Partikeln und Füllstoffpartikeln ähnlicher Grösse und Schüttdichte. Ein solches Produkt ist für die Applikation mittels Streubehälter sehr geeignet.

Es ist selbstverständlich, dass mittels der einfachen Konfektionierung auch Produkte herstellbar sind, die auf andere Weise appliziert und dosiert werden, z.B. mittels Portionenbeutel, Löffel für Löffel etc.

Das erfindungsgemässe Süssstoffpräparat enthält Partikel, die mindestens einen Süssstoff sowie vorzugsweise mindestens einen Füllstoff enthalten. Als Süssstoff sind alle gängigen kalorienarmen resp. kalorienfreien Süssstoffe geeignet, wie Aspartam, Saccharin, Acesulfam K, Cyclamat etc., wobei Aspartam seines zuckerähnlichen Geschmacks wegen speziell bevorzugt ist.

Zusätzlich enthält das Süssstoffpräparat Partikel mit hohem Füllstoffgehalt resp. reine Füllstoffpartikel.

Als Füllstoffe geeignet sind Stoffe, die zu kleinen, kristallzuckerähnlichen Partikeln verarbeitet werden können, die eine kristallzuckerähnliche Löslichkeit aufweisen und vorzugsweise weiss sind, wie Zuckeraustauschstoffe, z.B. Sorbit, Isomaltose, Polydextrose oder Kohlenhydrate insbesondere Zuckerarten und Maltodextrin.

Die Partikel des erfindungsgemässen Süssstoffpräparats können auch zusätzliche Stoffe enthalten, wie geschmacksverändernde Stoffe, z.B. Süssigkeitsunterdrücker resp. Süssigkeitsverstärker.

Die Süssigkeit des Süssstoffpräparats kann durch das Verhältnis von süssstoffreichen zu süssstoffarmen resp. von süssstoffhaltigen Partikel zu Füllstoffpartikeln gesteuert werden.

Das erfindungsgemässe Süssstoffpräparat wird in der Folge beispielhaft anhand des Systems Aspartam/ Maltodextrin näher erläutert.

Die Teilchengrösse liegt üblicherweise im Bereich von ca. 200 bis ca. 1000 μm, vorzugsweise zwischen ca. 300 bis ca. 800 μm. Die Löslichkeit sollte etwa derjenigen von Kristallzucker entsprechen. Da Aspartam schlecht benetzbar ist, kann die Löslichkeit über die Maltodextrin/Aspartam-Konzentration und insbesonders über das Dextroseäquivalent (DE) des Maltodextrins gesteuert werden. Es ist bekannt, dass die Löslichkeit mit steigendem DE zunimmt, wobei das Maltodextrin ab DE > 20 nicht mehr als Stärkederivat sondern als Glukosederivat zu betrachten ist. Es wird deshalb vorzugsweise ein Maltodextrin mit DE < 20 verwendet, z.B. DE 19 resp. eine Mischung, die gesamthaft einem DE < 20 entspricht.

Sowohl für die Herstellung der süssstoffhaltigen Partikel als auch für die Herstellung der Maltodextrinpartikel ist ein Sprühtrocknungsverfahren mit anschliessender Agglomeration oder eine Vakuum Bandtrocknung geeignet.

Die wesentlichen Verfahrensschritte für die Herstellung der süssstoffhaltigen Partikel sind:

(a) Herstellung einer wässrigen Suspension im gewünschten Verhältnis Füllstoff zu Süssstoff, wobei die Suspension vorzugsweise konzentriert ist
(b) Trocknen auf eine Restfeuchtigkeit von 3-6 Gew.-%
(c) Einstellen der Korngrösse

Vor dem Trocknungsschritt (b) wird die Lösung vorteilhafterweise pasteurisiert. Die Pasteurisierung erfolgt gewöhnlich bei 75-77° C. Die Pasteurisationszeit ist abhängig von der gewählten Vorrichtung. Im Durchlauferhitzer sind beispielsweise Zeiten von ca. 20 Sek. ausreichend, während im Batchverfahren z.B. unter Unwälzung mit Unwälzpumpe Zeiten von einigen Minuten üblich sind.

Bei der Sprühtrocknung wird die süssstoffund füllstoffhaltige Suspension unter steter Agitation in Suspension gehalten, wobei nur eine teilweise Löslichkeit von Aspartam erreicht wird. Die Trocknung erfolgt bei Lufttemperaturen von über 200° C beim Eintritt und unter 100° C beim Austritt.

Das derart erhaltene feinpulvrige Produkt wird anschliessend unter Dampfbefeuchtung, gefolgt von Wirbelschichttrocknung agglomeriert/instantisiert und auf die gewünschte Korngrösse ausgesiebt resp. getrennt.

Bei der Vakuum-Bandtrocknung wird die Suspension üblicherweise bei Temperaturen von 40 bis 50°C mittels Dosiereinrichtung nach vorheriger Pasteurisierung bei 75-80°C auf den Vakuumbandtrockner aufgegeben. Die Schichtdichte beträgt bis ca. 1 cm. Bei der Vakuum-Band-. trocknung erübrigt sich eine Agglomeration, da ein Produkt mit offenen Poren und entsprechend grosser Oberfläche entsteht, das die gewünschte Löslichkeit aufweist.

Die reinen Füllstoffpartikel lassen sich ebenfalls mit Bandtrocknung herstellen, doch wird üblicherweise ein sprühgetrocknetes/agglomeriertes Produkt verwendet.

Die wesentlichen Verfahrensschritte für die Herstellung der Füllstoffpartikel sind:

(a) Herstellung einer wässrigen Lösung
(b) Trocknung
(c) Einstellung der Partikelgrösse

Die Lösung in Schritt (a) enthält üblicherweise 45-50% Maltodextrin,. vorzugsweise ca. 48%. Diese Lösung wird, wie oben für die süssstoffhaltigen Partikel beschrieben, mittels Sprühtrocknung und anschliessender Agglomeration zu den gewünschten Partikeln verarbeitet.

Derart hergestellte Produkte lassen sich selbstverständlich mit den für Kristallzucker gebräuchlichen Methoden applizieren. Zum Beispiel kann der erfindungsgemässe Kristallzuckerersatz mit einem Löffel regelmässig über ein Dessert wie Beeren verteilt werden. Er kann aber auch in Portionensäckchen abgepackt werden, wie sie für die Verwendung von Kristallzucker in Restaurants heute üblich sind. Vorzugsweise erfolgt seine Applikation aber mittels des oben beschriebenen Streubehälters.

Diese Applikationsform eignet sich insbesonders zum kalorienarmen Süssen von Früchten, Beeren, Müesli, Dessert, Joghurt, Backwaren sowie für warme / kalte Getränke wie Kaffee, Tee, Milch, Fruchtsäfte etc.

Die Anwendung der Streusüsse zeichnet sich insbesondere durch eine sehr geringe Einsatzmenge (Prise), durch eine vernachlässigbar geringe Belastung durch Kohlenhydrate und Kalorien und somit durch Eignung für Diabetiker und Normalverbraucher, durch umweltfreundliche Verpackung (Geringster Verpackungsaufwand dank geringem Volumen und Nachfüllpackung), durch einfache Anwendung in Küche und Haushalt, durch hohen ernärungsphysiologischen Wert und optimale ernährungsphysiologische Sicherheit, sowie durch zuckerähnliches Aussehen, aus.

Beispiele

Beispiel 1: Herstellung von süssstoffhaltigen Partikeln (Süssstoffkonzentrat) mittels Sprühtrocknung

1.) Herstellung einer Süssstoff-Präparation bestehend aus:

| | |
|---|---|
| Aspartam Pulvar | 150 kg |
| Maltodextrin Pulver (DE < 20) DE 19 | 325 kg |
| Wasser | 550 kg |
| Total Süssstoffmasse | 1025 kg |

2.) Präparation wird bei 65° C während 30 - 45 Minuten gerührt und mittels Durchlauferhitzung bei 75 - 77° C während 20 Sekunden pasteurisiert.

3.) Die Süssstoff-Präparation wird unter steter Agitation bei 66 - 68° C gehalten und mittels Sprühtrocknung (Eintritt Lufttemperatur: 210 - 220° C/Austritt: 83 - 88° C) auf 2 - 4% Restfeuchte getrocknet.

4.) Erhaltenes Süssstoff-Konzentrat wird anschliessend nach Dampfbefeuchtung mittels Wirbelschicht Trocknung agglomeriert / instantisiert und auf eine Korngrösse von 300 - 800 μm ausgesiebt. Eine Schüttdichte von 0.3 - 0,45 g/cm$^3$ (lose) wird dabei angetrebt.

Typische Kornverteilung:

> 1000 μm = < 1%

250 - 1000 μm = 80 - 90%

< 250 μm= < 10%

| | |
|---|---|
| Aspartam Gehalt | 30.0 - 30.5% |
| Rest-Feuchtigkeitsgehalt | 3 - 4% |
| Schüttgewicht | 0,45-0,55 g/cm$^3$ verdichtet / 0,35-0,45 g/cm$^3$ lose |
| Lösungsgeschwindigkeit | 35-45 Sekunden, 1% wässrige Lösung / 50° C |

Beispiel 2: Herstellung von süssstoffhaltigen Partikeln mittels Vacuum Bandtrocknung

1.) Herstellung einer Süssstoff-Präparation bestehend aus:

| | |
|---|---|
| Aspartam Pulver | 332 kg |
| Maltodextrin DE 14, Pulver | 378 kg |
| Glukosesyrup (ca. 80% Trocken- substanz (TS)) | 449 kg |
| Wasser | 441 kg |
| Total Süssstoffmasse | 1600 kg |

2.) Maltodextrin, Aspartam und Wasser werden in ein Auflösegefäss gegeben und mittels Heizschlange auf 75° C erhitzt und unter Umwälzung mittels Umwälzpumpe pasteurisiert. Die Pasteurisationszeit beträgt bei 75° C : < 10 Min > 5 Min.

3.) Die pasteurisierte Masse wird auf 40-45° C abgekühlt und in einen Haltetank transferiert.

4.) Die Masse mit einer TS von 65-67% wird mittels Dosierpumpe und Dosier- und Verteileinrichtung in einer Schichtdicke von ca. 1 cm gleichmässig auf den Vakuum Bandtrockner aufgegeben und verteilt.

5.) Trocknungsbedingungen:

| | |
|---|---|
| Druck | 15 mm Hg |
| Bandgeschwindigkeit | 54 min./Durchlauf |
| Aufgabemenge | 500g/min./pro Dosieröffnung |
| Trocknungstemperaturen der Segment-Heizplatte | 125/115/105/40° C |
| Produkt Endfeuchte | ca. 5% |

6.) Die Vakuum getrockneten Stücke werden gesammelt und mittels Rotorsiebung auf < 1 mm Korngrösse zerkleinert und. auf eine Korngrösse zwischen 1 mm und 0.3 mm ausgesiebt.

| | |
|---|---|
| Aspartamgehalt | 30-30.5% |
| Rest Feuchtigkeitsgehalt | 4.9-5.9% |
| Schüttgewicht | 0.43-0.49 g/cm$^3$ (lose) |
| Löslichkeit | 1%, ca. 60 Sek. in wässriger Lösung / 50° C |

Beispiel 3: Verfahren zur Herstellung der Füllstoffpartikel

Verfahrensablauf

1.) Herstellung einer 48% Maltodextrinlösung mit Maltodextrin DE 19

2.) Maldodextrin Lösung auf 75° C erhitzen und mittels Sprühtrocknung bei 200-225° C. Lufttemperatur Eintritt) und 83-87° C (Lufttemperatur Austritt) auf 2-4% Restfeuchte getrocknet.

3.) Füllstoffpartikel werden mittels Wirbelschicht Agglomeration instantisiert und auf eine Korngrösse von 300-800 μm ausgesiebt. Eine Schüttdichte von 0.4-0.5 (verdichtet) wird angestrebt.

Beispiel 4: Tafelsüsse (auch für Portionenbeutel (PB))

1 kg Tafelsüsse (PB) entspricht Süsskraft von 6 kg. Zucker.

1 Volumeneinheit (Liter) Tafelsüsse (0.5 kg) entspricht der Süsskraft von 3 Volumeneinheiten (l) Zukker (3 kg.)

Zusammensetzung:

10% Süssstoffkonzentrat enthaltend 30% Aspartam/70% Maltodextrin, agglomeriert.
90% Maltodextrin, DE 19, agglomeriert.
Schüttgewicht: 0.4-0.5 g/cm$^3$
1 g Tafelsüsse (PB) (4 kcal) entspricht Süsskraft / Kalorien von 6 g Zucker. (24 kcal)
Kalorienreduktion gegenüber Zucker: 83%
Kohlenhydratreduktion gegenüber Zucker: 83%

Dieses Produkt ist neben der Verwendung im Streubehälter insbesonders auch für die Verwendung als kalorienarmer Kristallzuckerersatz in Portionenbeuteln in Restaurants, Kantinen etc. geeignet.

Beispiel 5: Tafelsüsse für Haushaltgebrauch "Löffel für Löffel" (LfL)

1 kg Tafelsüsse (LfL) entspricht Süsskraft von 2 kg. Zucker.
1 Löffel Tafelsüsse (LfL) entspricht der Süsskraft von 1 Löffel Zucker.
1 Volumeneinheit (l) Tafelsüsse (0.5 kg) entspricht 1 Volumeneinheit (l) Zucker (1 kg)

Zusammensetzung:

5% Süssstoffkonzentrat enthaltend 30% Aspartam/70% Maltodextrin, agglomeriert

95% Maltodextrin, DE 19, agglomeriert.
Schüttgewicht: 0.4-0.5 g/cm$^3$
1 g Tafelsüssstoff (LfL) = 4 kcal entspricht Süsskraft / Kalorien von 2 g Zucker = 8 kcal
Kalorienreduktion gegenüber Zucker: 50%
Kohlenhydratreduktion gegenüber Zucker: 50%

Insbesonders zum Bestreuen von Früchten, Müesli, Dessert, Joghurts, Gebäck etc. sowie zum Süssen von kalten und warmen Getränken wie Kaffee, Tee, Milchgetränke, Fruchtsäfte etc. mittels Löffel.
Die Applikation im Streubehälter ist zwar möglich aber wegen der relativ grossen anzuwendenden Menge nicht bevorzugt. Diese Präparation ist speziell geeignet für die Applikation und Dosierung mittels Löffel aus Dose oder Glas.

Beispiel 6: Tafelsüsse für Haushaltgebrauch (HG)

1 Löffel Tafelsüsse (HG) entspricht Süsskraft von 3 Löffel Zucker.
1 kg Tafelsüsse (HG) entspricht Süsskraft von 6 kg Zucker
1 Volumeneinheit (Liter) Tafelsüsse (0.5 kg) entspricht der Süsskraft von 3 Volumeneinheiten (1) Zukker (3 kg)

Zusammensetzung:

10% Süssstoffkonzentrat enthaltend 30% Aspartam/70% Maltodextrin, agglomeriert
90% Maltodextrin, DE 19, agglomeriert
Schüttgewicht: 0.4-0.5 g/cm$^3$
1 g Tafelsüssstoff (HG) = 4 kcal entspricht Süsskraft / Kalorien von 6 g Zucker = 24 kcal
Kalorienreduktion gegenüber Zucker: 83%
Kohlenhydratreduktion gegenüber Zucker: 83%

Zum Bestreuen von Früchten, Müesli, Desserts, Joghurts, Gebäck etc. sowie für warme / kalte Getränke wie Kaffee, Tee, Milch, Fruchtsäfte etc. mittels Löffel. Höhere Kalorienreduktion als "Löffel für Löffel".
Auch hier ist die Applikation mittels Streubehälter möglich, aber die Dosierung mit Löffel aus Dose oder Glas bevorzugt.

Beispiel 7: Tafelsüsse "Streusüsse" (SS)

Zusammensetzung

30% Süssstoffkonzentrat enthaltend 30% Aspartam/70% Maltodextrin, agglomeriert.
70% Maltodextrin, DE 19, agglomeriert.
Schüttgewicht: 0.4-0.5 g/cm$^3$
1 Prise (0.25 g = 1 1 kcal) entspricht Süsskraft von 1 Löffel (5 g = 20 kcal) Zucker.
Inhalt Streuer = 50 g Streusüsse entspricht Süsskraft von 1 kg Zucker.
1 g Streusüsse (SS) = 4 kcal entspricht Süsskraft/Kalorien von 20 g Zucker = 80 kcal.
1 Volumeneinheit (l) Streusüsse (0.5 kg) entspricht 10 Volumeneinheiten (l) Zucker (10 kg)
Kalorienreduktion gegenüber Kristallzucker: 95%

Kohlenhydratreduktion gegenüber Zucker: 95%

Diese Formulierung ist infolge der hohen Süsskraft spezielle für die Applikation/Dosierung mittels Streubehälter geeignet.

Beispiel 8: Tafelsüsse - Streusüsse (TS)

Zusammensetzung:

5.5% Aspartam Pulver
94.5% Zucker 00 (Griesszucker, feinkristallin, Körnung: mind. 90% 100-300 μm)
In Gebieten mit hoher Luftfeuchtigkeit, Einsatz von geringen Mengen (0.1 - 0.5%) von Anti-Klumpmittel vom Typ Silikate (Ca, Na, oder Mg-Silikat) oder Siliziumdioxid sinnvoll.

Schüttgewicht: 0.9 - 1.0 g/cm$^3$
1 Prise (0.5 g = 2 kcal) entspricht Süsskraft von 1 Löffel Zucker (Süssäquivalent 5 % Zucker in Wasser, Tee, Kaffee)
1 g Streusüsse (TS = 4 kcal) entspricht Süsskraft/Kalorien von 10 g Zucker = 40 kcal
1 Volumeneinheit (l) Streusüsse (1 kg) entspricht 10 Volumeneinheiten (l) Zucker (10 kg)
Kalörienreduktion TS gegenüber Kristallzucker: 90%.

Herstellung:

Trockenmischung von Aspartam Pulver mit 00-Zucker (und Antiklumpmittel falls notwendig). Durch die feine Körnung von 00-Zucker (100-300 μm) ergibt sich eine homogene Verteilung der Aspartamkristalle ohne Gefahr von Entmischung. Die Feinverteilung von Zucker sowie die geringe Korngrösse von Aspartam Pulver (< 100 μm/ typisch 30-75 μm) ergeben eine relativ gute Löslichkeit der Streusüsse.
Diese Formulierung ist speziell einfach herstellbar und durch hohe Süsskraft speziell für die Applikation/Dosierung mittels Streubehälter geeignet.
Die Beispiele gelten analog auch für andere Füllstoffe z.B. Zuckeraustauschstoffe wie Sorbit sowie Zuckerarten (Laktose etc.).
Es ist dem Fachmann klar, dass der erfindungsgemässe Kristallzuckerersatz gleichzeitig mehrere Süssstoffe, Füllstoffe und/oder andere Zusätze enthalten kann, sei es in einer oder verschiedenen Partikelsorten.

**Patentansprüche**

1. Verfahren zur Applikation von kristallzuckerähnlichen Süssstoffpräparaten, **dadurch gekennzeichnet, dass** das Süssstoffpräparat mittels eines Streubehälters (1) mit Siebfläche (2) appliziert wird.

2. Verfahren gemäss Anspruch 1, **dadurch gekennzeichnet, dass** das Süssstoffpräparat eine Schüttdichte von mindestens 0.2 g/cm$^3$ vorzugsweise mindestens 0.3 g/cm$^3$ aufweist.

3. Verfahren gemäss Anspruch 1 oder 2, **dadurch gekennzeichnet, dass** das Süssstoffpräparat eine Schüttdichte von 0.4 - 0.5 g/cm$^3$ aufweist.

4. Verfahren gemäss einem der Ansprüche 1 bis 3, **dadurch gekennzeichnet, dass** das Süssstoffpräparat mindestens 90% Partikel mit Grössen von 200 bis 1000 μm, vorzugsweise 300 - 800 μm enthält.

5. Verfahren gemäss einem der Ansprüche 1 bis 4, **dadurch gekennzeichnet, dass** das Süssstoffpräparat süssstoffhaltige Partikel und Füllstoffpartikel enthält.

6. Verwendung von Füllstoffpartikeln, die aus Agglomeraten bestehen, als Bestandteil eines Kristallzuckerersatzes.

7. Verwendung gemäss Anspruch 6, **dadurch gekennzeichnet, dass** die Füllstoffpartikel aus Agglomeraten mit Durchmessern von 200 bis 1000 μm bestehen.

8. Verwendung gemäss Anspruch 7, **dadurch gekennzeichnet, dass** die Füllstoffpartikel aus Agglomeraten mit Durchmessern von 300 - 800 μm bestehen.

9.  Streubehälter (1) mit Siebfläche (2), **dadurch gekennzeichnet, dass** er ein kristallzuckerähnliches Süssstoffpräparat enthält.

10. Streubehälter (1) gemäss Anspruch 9, **dadurch gekennzeichnet, dass** er nachfüllbar ist, wobei die Nachfüllung durch die Siebfläche erfolgt, oder wobei die Siebfläche abnehmbar ist und die Einfüllöffnung freigibt.

11. Verwendung eines Kristallzuckerersatzes in einem Verfahren gemäss einem der Ansprüche 1 bis 5.

12. Verwendung gemäss Anspruch 11, **dadurch gekennzeichnet, dass** der Kristallzuckerersatz süssstoffreiche und süssstoffarme und/oder süssstofffreie Partikel enthält.

**Claims**

1.  Method for the application of crystallised sugar-like sweetening agents comprising preparations **characterised in that** sweetening agents comprising preparation is applied by means of a shaker (1) with a sieve (2).

2.  The method of claim 1, **characterised in that** the sweetening agents comprising preparation has a bulk density of at least 0.2 g/cm$^3$, preferably at least 0.3 g/cm$^3$.

3.  The method of claim 1 or 2, **characterised in that** the sweetening agents comprising preparation has a bulk density of at least 0.4 - 0.5 g/cm$^3$.

4.  The method of anyone of claims 1 to 3, **characterised in that** the sweetening agents comprising preparation comprises particles at least 90 % of which have particle sizes of 200 to 1000 μm, preferably of 300 to 800 μm.

5.  The method of anyone of claims 1 to 4, **characterised in that** the sweetening agents comprising preparation comprises sweetening agent comprising particles and filler particles.

6.  Use of filler particles consisting of aggregates as constituent of a crystallised sugar substitute.

7.  The use of claim 6, **characterised in that** the filler particles consist of aggregates with diameters of 200 to 1000 μm.

8.  The use of claim 7, **characterised in that** the fillerparticles consist of aggregates with diameters of 300 to 800 μm.

9.  Shaker (1) with a sieve (2), **characterised in that** it comprises a crystallised sugar-like sweetening agent comprising preparation.

10. The shaker (1) of claim 9, **characterised in that** it is refillable, whereby refilling is performed through the sieve, or whereby the sieve is removable thereby giving access to a refill opening.

11. Use of a crystallised sugar substitute in a method according to anyone of claims 1 to 5.

12. The use of claim 11, **characterised in that** the crystallised sugar substitute comprises sweetening agent rich and sweetening agent poor and/or sweetening agent free particles.

**Revendications**

1.  Procédé d'application d'édulcorants similaires à du sucre cristallisé **caractérisé en ce que** l'édulcorant est appliqué au moyen d'un saupoudreur (1) à surface criblante (2).

2.  Procédé selon la revendication 1 **caractérisé en ce que** l'édulcorant présente une masse volumique apparente d'au moins 0,2 g/cm$^3$, de préférence d'au moins 0,3 g/cm$^3$.

3.  Procédé selon la revendication 1 ou 2 **caractérisé en ce que** l'édulcorant présente une masse volumique apparente de 0,4 à 0,5 g/cm$^3$.

**4.** Procédé selon l'une des revendications 1 à 3 **caractérisé en ce que** l'édulcorant contient au moins 90 % de particules ayant des tailles de 200 à 1 000 μm, de préférence de 300 à 800 μm.

**5.** Procédé selon l'une des revendications 1 à 4 **caractérisé en ce que** l'édulcorant contient des particules d'édulcorant et des particules de matière de remplissage.

**6.** Utilisation de particules de matière de remplissage, qui consistent en agglomérats, comme constituant d'un produit de remplacement du sucre cristallisé.

**7.** Utilisation selon la revendication 6 **caractérisée en ce que** les particules de matière de remplissage consistent en agglomérats ayant des diamètres de 200 à 1 000 μm.

**8.** Utilisation selon la revendication 7 **caractérisée en ce que** les particules de matière de remplissage consistent en agglomérats ayant des diamètres de 300-800 μm.

**9.** Saupoudreur (1) à surface criblante (2) **caractérisé en ce qu'**il contient un édulcorant similaire à du sucre cristallisé.

**10.** Saupoudreur (1) selon la revendication 9 **caractérisé en ce qu'**il peut être regarni, le regarnissage étant réalisé au travers de la surface criblante, ou bien la surface criblante est amovible et libère l'ouverture de remplissage.

**11.** Utilisation d'un produit de remplacement du sucre cristallisé dans un procédé selon l'une des revendications 1 à 5.

**12.** Utilisation selon la revendication 11 **caractérisée en ce que** le produit de remplacement du sucre cristallisé contient des particules riches en édulcorant et des particules pauvres en édulcorant et/ou exemptes d'édulcorant.

Fig. 1

Fig. 2